## Europäisches Patentamt
## European Patent Office
## Office européen des brevets

(19)

(11) Veröffentlichungsnummer: **0 003 604**
**B1**

(12)

# EUROPÄISCHE PATENTSCHRIFT

(21) Anmeldenummer: **79100397.3**

(22) Anmeldetag: **12.02.79**

(51) Int. Cl.³: **B 65 G 27/00   B 65 G 47/12**

(54) Schwingzuführgerät

(30) Priorität: **15.02.78 DE 2806331**

(43) Veröffentlichungstag der Anmeldung:
**22.08.79 Patentblatt 79/17**

(45) Bekanntmachung des Hinweises auf die Patenterteilung:
**26.11.80 Patentblatt 80/24**

(84) Benannte Vertragsstaaten:
**BE FR GB IT NL**

(56) Entgegenhaltungen:
**DE - A - 2 044 073**
**DE - A - 2 045 950**
**DE - A - 21 59 718**
**DE - B - 1 274 970**
**FR - A - 2 262 632**
**GB - A - 1-074 630**
**US - A - 3 101 832**
**US - A - 3 414 112**

(73) Patentinhaber: **Feldpausch GmbH & Co. KG.**
**Am Wendelpfad 11**
**D - 5880 Lüdenscheid (DE)**

(72) Erfinder: **Feldpausch, Hugo**
**Wassersteige 5**
**D - 5880 Lüdenscheid (DE)**

(74) Vertreter: **Hassler, Werner, Dr., et al**
**Postfach 1704**
**D - 5880 Lüdenscheid (DE)**

Courier Press, Leamington Spa, England.

Schwingzuführgerät

Die Erfindung betrifft ein Schwingzuführgerät mit einem Schwingtopf, mit einem den Schwingtopf aufnehmenden Gehäuse und mit einem Vorratsbunker, dessen drehbar abgestütze, kegelförmige Bodenplatte mit einem Trichter des Vorratsbunkers eine ringförmige Ausgabeöffnung begrenzt.

Ein derartiges Schwingzuführgerät dient zum lagerichtigen Ordnen und Zuführen von Teilen an Montagemaschinen und dergleichen. Innerhalb des Schwingtopfes soll sich jeweils nur ein geringer Vorrat an Teilen befinden, damit der Schwingtopf mit möglichst gleichbleibenden Betriebsbedingungen betrieben werden kann. Infolgedessen ist ein Vorratsbunker oberhalb des Schwingtopfes vorgesehen, dessen Ausgabeöffnung Teile auf den Boden des Schwingtopfes abgibt. Dieser Vorratsbunker steht normalerweise neben dem Schwingzuführgerät und ist vergleichsweise hoch. Es ergeben sich dann Schwierigkeiten beim Füllen dieses Vorratsbunkers. Der Vorratsbunker selbst kann auf Vibrationsbasis arbeiten. Es kann zu Störungen bei der Nachförderung von Teilen kommen, indem sperrige oder komplizierte Werkstücke sich im Ausgabebereich verhaken und die Förderung blockieren. Ein derartiger Vibrationsbunker erzeugt einen sehr hohen Lärmpegel, der zu Schwierigkeiten führt.

Ein Schwingzuführgerät der eingangs gennannten Art ist in der DE—OS 20 45 950 beschrieben. Die Bodenplatte ist innerhalb des Schwingtopfes drehbar angeordnet, damit diese Bodenplatte den Bewegungen des Schwingtopfes folgen kann. Durch den Ringspalt zwischen der Bodenplatte und dem Vorratstrichter können die Teile austreten. Eine besondere Steuerung oder Regelung des Austritts ist jedoch nicht möglich.

Aufgabe der Erfindung ist eine solche Ausbildung des Schwingzuführgerätes, daß eine gleichmäßige, vereinzelte Ausgabe der Werkstücke aus dem Vorratsbunker gewährleistet ist.

Diese Aufgabe wird nach der Erfindung dadurch gelöst, daß auf der Oberfläche der als Vereinzelungsscheibe wirksamen Bodenplatte eine Spiralbahn angeordnet ist, daß ein an dem Trichter befestigter Ringvorhang mit einem nachgiebigen Rand den Rand der Vereinzelungsscheibe übergreift und daß eine Antriebsvorrichtung für die Vereinzelungsscheibe vorgesehen ist.

Der Ringspalt ist durch den Ringvorhang nachgiebig abgeschlossen. Die Spiralbahn der Vereinzelungsscheibe drückt die Teile einzeln durch diesen Ringvorhang und zwar in gleichmäßiger Verteilung über den gesamten Umfang der Vereinzelungsscheibe. Infolgedessen werden die Teile gleichmäßig innerhalb des Schwingtopfes verteilt, so daß sie geordnet und gleichmäßig von der Schraubenbahn des Ringtopfes aufgenommen werden können. Der Antrieb der Vereinzelungsscheibe sorgt für einen gleichmäßigen Austrag der Teile.

Eine Antriebsvorrichtung der Vereinzelungsscheibe ist unterhalb des Schwingtopfes im Zentrum des Gehäuses angeordnet. Diese Maßnahme ermöglicht eine besonders tiefe Anordnung des Vorratsbunkers, so daß die Bauhöhe des gesamten Schwingzuführgerätes dadurch vergleichsweise klein ist. Der Vorratsbunker beansprucht wenig zusätzlichen Platz und ist mit seinem Auslauf ganz in das Innere des Schwingtopfes hineingelegt. Der Antrieb selbst für die Vereinzelungsscheibe findet im Zentrum des Gehäuses des Schwingtopfes Aufnahme.

In weiterer Ausbildung der Erfindung ist vorgesehen, daß der Unterrand des Ringvorhangs in axialer Richtung verlaufende Schlitze zur Bildung von nachgiebigen Streifen aufweist. Dadurch ist eine zuverlässige Bewegung des Ringvorhangs unter dem Einfluß der durchtretenden Teile gewährleistet.

Damit der Vorratsbunker fest und ohne zusätzliche Maßnahmen mit dem Gerät verbunden werden kann, ist vorgesehen, daß der Topf des Vorratsbunkers mit Stützen auf dem Gehäuse abgestützt ist.

Ferner sieht die Erfingung vor, daß um die Stützen ein Spannband herumgelegt ist, das in der Mantelfläche des Gehäuses verläuft. Dieses Spannband ermöglicht nach Lösen einen weitgehend freien Zugang in den Innenraum des Gerätes, so daß notwendige Wartungsarbeiten in einfacher Weise durchgeführt werden können.

Ferner sieht die Erfindung vor, daß ein Fühler zur Abtastung der Füllmenge in dem Schwingtopf vorgesehen ist und daß der Antrieb der Vereinzelungsscheibe in Abhängigkeit von den Signalen des Fühlers steuerbar ist. Mit diesem Fühler läßt sich der Antrieb der Vereinzelungsscheibe entsprechend den jeweiligen Erfordernissen regeln, so daß eine gleichmäßige Zufuhr von Teilen entsprechend dem Bedarf gewährleistet ist.

Eine Ausführungsform der Erfindung wird im folgenden unter Bezugnahme auf die anliegende Zeichnung erläutert, in der darstellen:

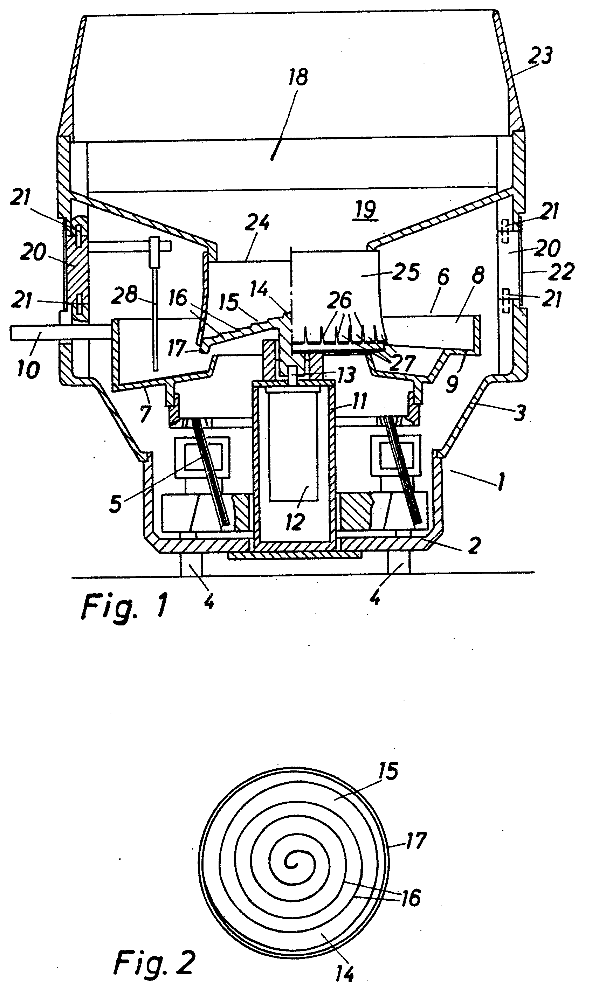

Fig. 1 einen schematischen Schnitt durch ein Schwingzuführgerät nach der Erfindung und

Fig. 2 die Vereinzelungsscheibe im Grundriß.

Das Schwingzuführgerät ist innerhalb eines Gehäuses 1 mit einem Bodenteil 2 und einem Wandungsteil e aufgebaut. Der Bodenteil 2 steht auf Fußen 4. Innerhalb des Bodenteils 2 findet sich ein Schwingantrieb 5 für einen Schwingtopf 6, der einen ringförmigen Bodenteil 7 sowie eine Ringwandung 8 mit einer Schraubenbahn 9 aufweist. Die Schraubenbahn 9 dient zur Führung der Teile zu einem Auslauf 10. Mit der Schraubenbahn 9 und dem Auslauf 10 wirken in bekannter Weise Richtelemente

und Leitelemente zusammen, was im einzelnen nicht dargestellt ist.

Im Zentrum des Bodenteils 2 des Gehäuses 1 ist ein Antriebskasten 11 vorgesehen, der einen Antriebsmotor 12 mit vertikal nach oben gerichteter Ausgangswelle 13 aufnimmt. Auf die Ausgangswelle 13 ist eine Vereinzelungsscheibe 14 aufgesetzt, deren Oberfläche 15 kegelförmig ausgebildet ist und eine Spiralbahn 16 aufweist. Der Rand 17 der Vereinzelungsscheibe 14 liegt über dem Bodenteil 7 des Schwingtopfes 6.

Ein Vorratsbunker 18 mit einem trichterförmigen Teil 19 ist koaxial oberhalb des Schwingtopfes 6 angeordnet und mit Stützen 20 auf dem Wandungsteil 3 des Gehäuses 1 abgestützt. Die Stützen 20 sind mit Zapfen 21 sowohl mit dem Wandungsteil 3 als auch mit dem Vorratsbunker 18 verbunden, so daß der Vorratsbunker 18 fest auf dem Gehäuse 1 gehalten ist. Um die Stützen 20 ist ein Spannband 22 herumgelegt, das das Gehäuse 1 nach oben abschließt. Auf den Vorratsbunker 18 ist ein Aufsatz 23 aufgesetzt. Der trichterförmige Teil 19 liegt mit seiner Mündung 24 oberhalb der Vereinzelungsscheibe 14. Die Vereinzelungsscheibe 14 ist gleichzeitig die Bodenplatte des Vorratsbunkers 18. Am Außenrand der Mündung 24 ist ein Ringvorhang 25 befestigt, der zum Beispiel als Kunststoffschlauch ausgebildet ist. Das untere Stirnende des Ringvorhangs 25 weist in axialer Richtung verlaufende Schlitze 26 zur Bildung von nachgiebigen Streifen 27 auf. Der Stirnrand des Ringvorhangs 25 auf dem Streifen 27 übergreift den Rand 17 der Vereinzelungsscheibe 14.

Ein Fühler 28 ist auf den Bodenteil 7 des Schwingtopfes ausgerichtet und dient zur Abtastung der Füllmenge des Schwingtopfes 6.

Der Schwingtopf 6 arbeitet in üblicher Weise zur Vereinzelung und Ordnung von Werkstücken, die über den Auslauf 10 einer Montagemaschine oder einer anderen Verwendungsstelle zugefürt werden. Der Vorratsbunker 18 liegt unmittelbar oberhalb des Schwingtopfes 6 und ist daher zum Nachfüllen von Werkstücken leicht zugänglich. Die Werkstücke fallen durch die Mündung 24 des Vorratsbunkers 18 herab und liegen auf der Vereinzelungsscheibe 14. Jeweils zur Ausgabe von Teilen wird der Antriebsmotor 12 in Gang gesetzt, so daß die Vereinzelungsscheibe 14 gedreht wird. Die Spiralbahn 16 drückt die Werkstücke jeweils einzeln nach außen. Am Rand der Vereinzelungsscheibe 14 heben die Werkstücke die Streifen 27 des Ringsvorhangs 25 an und können jeweils einzeln durch diesen Austrittsspalt des Vorratsbunkers austreten und auf den Bodenteil 7 des Schwingtopfes 6 herabfallen.

Der Fühler 28 spricht auf die Menge der Teile innerhalb des Schwingtopfes 6 an. Wenn diese Menge der Werkstücke einen voreingestellten Wert übersteigt, wird der Antriebsmotor 12 stillgesetzt. Wenn die Menge der Werkstücke innerhalb des Schwingtopfes infolge der Abgabe von Werkstücken durch den Auslauf 10 wieder abnimmt, wird der Antriebsmotor 12 erneut in Gang gesetzt, so daß Teile aus dem Vorratsbunker 18 in den Schwingtopf 6 nachgeliefert werden. Die Zufuhr der Teile aus dem Vorratsbunker 18 ist sehr gleichmäßig. Ein Versperren des Austrittsspaltes ist praktisch ausgeschlossen, da der Austrittsspalt sich über den gesamten Umfang der Vereinzelungsscheibe 14 erstreckt. Ebenso ist ein Verhaken von Teilen innerhalb des Vorratsbunkers 18 ausgeschlossen. Die Größe der Streifen 27 ist selbstverständlich auf die Größe der jeweils verarbeiteten Werkstücke abgestimmt.

Der Antrieb für den Vorratsbunker 18 ist in das Zentrum des Gehäuses 1 verlegt, so daß oberhalb des Schwingtopfes 6 und innerhalb des Vorratsbunkers 18 kein Raum für den Antrieb benötigt wird. Infolgedessen kann der Vorratsbunker 18 vergleichsweise groß sein und eine möglichst große Anzahl von Werkstücken aufnehmen. Die Spiralbahn 15 der Vereinzelungsscheibe 14 stellt sicher daß Werkstücke beliebiger Art und auch Werkstücke mit komplizierter Formgebung einzeln und dosiert durch den Austrittsspalt des Vorratsbunkers 18 bewegt, sozusagen herausgeschraubt werden. Der nachgiebige Ringvorhang läßt die Werkstücke jeweils nur einzeln herausfallen. Die Geräuschentwicklung der Ausgabe aus dem Vorratsbunker ist überraschend gering. Dies ist vor allem darauf zurückzuführen, daß die Ausgabe aus dem Vorratsbunker vibrationsfrei arbeitet. Die Werkstücke werden durch diese schonende Ausgabe mit Hilfe der Vereinzelungsscheibe 14 geschont, so daß keine Beschädigungen der Werkstücke auftreten können. Das gesamte Schwingzuführgerät kann durch eine einzige Haube abgekapsel werden, so daß ein optimaler Lärmschutz gegeben ist.

Der Aufsatz 23 ermöglicht eine Vergrößerung des Volumens des Vorratsbunkers 18.

Das Spannband 22 deckt den Innenraum des Zuführgerätes ab. Nach Lösen des Spannbandes 22 ist jedoch dieser Innenraum weitgehend frei zugänglich, so daß notwendige Eingriffe und Wartungsarbeiten vorgenommen werden können.

**Patentansprüche**

1. Schwingzuführgerät mit einem Schwingtopf (6), mit einem den Schwingtopf (6) aufnehmenden Gehäuse (1) und mit einem Vorratsbunker (18), dessen drehbar abgestützte, kegelförmige Bodenplatte (14) mit einem Trichter (19) des Vorratsbunkers (18) eine ringförmige Ausgabeöffnung begrenzt, dadurch gekennzeichnet, daß auf der Oberfläche der als Vereinzelungsscheibe (14) wirksamen Bodenplatte eine Spiralbahn (16) angeordnet ist, daß ein an dem Trichter (19) befestigter Ringvorhang (25) mit einem nachgiebigen Rand den Rand (17) der Vereinzelungsscheibe (14) übergreift und daß eine Antriebsvorrichtung (12) für die Vereinzelungsscheibe (14) vorgesehen ist.

2. Schwingzuführgerät nach Anspruch 1, dadurch gekennzeichnet, daß die Antriebsvorrichtung (12) unterhalb des Schwingtopfes (6) im Zentrum des Gehäuses (1) angeordnet ist.

3. Schwingzuführgerät nach Anspruch 1 oder 2, dadurch gekennzeichnet, daß der Unterrand des Ringvorhangs (25) in axialer Richtung verlaufende Schlitze (26) zur Bildung von nachgiebigen Streifen (27) aufweist.

4. Schwingzuführgerät nach einem · der Ansprüche 1 bis 3, dadurch gekennzeichnet, daß der Topf des Vorratsbunkers (18) mit Stützen (20) auf dem Gehäuse (1) abgestützt ist.

5. Schwingzuführgerät nach Anspruch 4, dadurch gekennzeichnet, daß um die Stützen (20) ein Spannband (22) herumgelegt ist, das in der Mantelfläche des Gehäuses (1) verläuft.

6. Schwingzuführgerät nach einem der Ansprüche 1 bis 5, dadurch gekennzeichnet, daß ein Fühler (28) zur Abtastung der Füllmenge in dem Schwingtopf (6) vorgesehen ist und daß der Antrieb (12) der Vereinzelungsscheibe (14) in Abhängigkeit von den Signalen des Fühlers steuerbar ist.

### Claims

1. Vibrating feeder apparatus, having a vibrating cup (6), having a housing (1), receiving the vibrating cup (6), and having a storage bin (18), the rotatably supported conical bottom plate (14) of which limits, by a funnel (19) of the storage bin (18), an annular outlet opening, characterized in that there is arranged a spiral path (16) on the surface of the bottom plate, acting as a singling disk (14), that an annular curtain (25) fastened to the funnel (19) overlaps by an elastic border the border (17) of the singling disk (14), and that there is provided a drive device (12) for the singling disk (14).

2. Vibrating feeder apparatus according to claim 1, characterized in that the drive device (12) is arranged beneath the vibrating cup (6) in the centre of the housing (1).

3. Vibrating feeder apparatus according to claim 1 or claim 2, characterized in that the lower border of the annular curtain (25) comprises slots (26), extending in the axial direction, for the formation of elastic strips (27).

4. Vibrating feeder apparatus according to one of claims 1 to 3, characterized in that the cup of the storage bin (18) is supported on the housing (1) by means of supports (20).

5. Vibrating feeder apparatus according to claim 4, characterized in that there is placed a tightening strap (22) around the supports (20), which tightening strap extends in the shell surface of the housing (1).

6. Vibrating feeder apparatus according to one of claims 1 to 5, characterized in that there is provided a feeler device (28) for the scanning of the filling quantity in the vibrating cup (6), and that the drive (12) of the singling disk (14) is controllable as a function of the signals of the feeler device.

### Revendications

1. Dispositif d'alimentation oscillant comprenant une cuve oscillante (6), un boîtier (1) dans lequel est logée la cuve oscillante (6) et une trémie d'approvisionnement (18), dont la plaque de fond (14) conique, supportée de manière à pouvoir pivoter, délimite avec un entonnoir (19) de la trémie d'approvisionnement (18) une ouverture de sortie annulaire, caractérisé en ce que sur la surface de la plaque de fond agissant à titre de plaque d'isolement (14) est agencée une voie spiralée (16), en ce qu'un rideau annulaire (25) fixé sur l'entonnoir (19) et présentant un bord élastique recouvre le bord (17) de la plaque d'isolement (14) et en ce qu'un dispositif d'entraînement (12) est prévu pour la plaque d'isolement (14).

2. Dispositif d'alimentation oscillant suivant la revendication 1, caractérisé en ce que le dispositif d'entraînement (12) est agencé en dessous de la cuve oscillante (6), au centre du boîtier (1).

3. Dispositif d'alimentation oscillant suivant la revendication 1 ou 2, caractérisé en ce que le bord inférieur du rideau annulaire (25) présente des fentes (26) disposées en sens axial, pour la formation de bandes élastiques (27).

4. Dispositif d'alimentation oscillant suivant l'une des revendications 1 à 3, caractérisé en ce que la cuve de la trémie d'approvisionnement (18) est en appui sur le boîtier (11) à l'aide de supports (20).

5. Dispositif d'alimentation oscillant suivant la revendication 4, caractérisé en ce qu'une bande de serrage (22), qui est disposée dans la surface d'enveloppe du boîtier (11), est agencée autour des supports (20).

6. Dispositif d'alimentation oscillant suivant l'une des revendications 1 à 5, caractérisé en ce qu'un détecteur (28) est prévu pour détecter la quantité de remplissage dans la cuve oscillante (6) et en ce que l'entraînement (12) de la plaque d'isolement (14) peut être commandé en fonction des signaux du détecteur.

Fig. 1

Fig. 2